# EUROPÄISCHE PATENTANMELDUNG

(11) **EP 0 808 561 A1**
(43) Veröffentlichungstag der Anmeldung: **26.11.1997**
(21) Anmeldenummer: 97107865.4
(22) Anmeldetag: 14.05.1997
(51) Int. Cl.: A01J 5/01, A01J 7/00, A01J 11/04, G01F 15/08

(54) **Luftabscheider für einen Milchsammelwagen**

(30) Priorität: 24.05.1996 DE 19621167
(71) Anmelder: M. Jansky GmbH, 86544 Aichach (DE)
(72) Erfinder: Jansky, Manfred, 48282 Emsdetten (DE)
(74) Vertreter: Cohausz & Florack

(57) **Zusammenfassung**

Die Erfindung bezieht sich auf einen Luftabscheider für einen Milchsammelwagen. Um im Luftabscheidebehälter (1) das Milchniveau in einem zur Vermeidung von Turbulenzen durch die einlaufende Milch optimalen Niveaubereich oberhalb des Einlaufs zu halten, und um gegebenenfalls eine in der Saugleitung (7) angeordnete Pumpe vor dem Kavitieren bei voller Förderleistung zu schützen, ist vorgesehen, daß eine Pumpe (9) mit steuerbarer Förderleistung in der Saugleitung oder der zu einem Sammeltank führenden Förderleitung (8a,b) angeordnet ist, die über eine Regeleinrichtung (6) in Abhängigkeit vom Milchniveau im Luftabscheidebehälter (1) gesteuert wird.

Für die Zusammenfassung ist die einzige Figur bestimmt.

## Beschreibung

Die Erfindung betrifft einen Luftabschneider für einen Milchsammelwagen mit einer in den Luftabscheidebehältereinmündenden Saugleitung für die von einen Lieferanten anzunehmende Milch und einer vom Luftabscheidebehälter zu einem Sammeltank führenden Förderleitung, wobei in der Saug- oder Förderleitung eine Pumpe angeordnet ist, deren Förderleistung steuerbar ist und der eine auf das Füllstandsniveau im Luftabscheidebehälter ansprechende Regeleinrichtung zugeordnet ist.

Luftabscheider dieser Art sind bekannt. Sie dienen dazu, die von einem Lieferanten unvermeidlich unter Einschluß von Luft angenommene Milch von der Luft zu trennen, um anschließend bei der Förderung in einen Sammeltank eine fehlerfreie volumetrische Messung der Milch vornehmen zu können.

Bei einer ersten Art solcher Luftabscheider ist an dem Luftabscheidebehälter eine Vakuumpumpe angeschlossen, deren Vakuum über den Luftabscheidebehälter an der Saugleitung wirksam ist, um die anzunehmende Milch in den Luftabscheidebehälter zu saugen. Aus dem Luftabscheidebehälter wird mittels einer Pumpe, die gegen den Unterdruck im Luftabscheidebehälter arbeitet, die Milch aus dem Luftabscheidebehälter in den Sammeltank gefördert.

Bei einer zweiten Art von Luftabscheiden ist in der Saugleitung eine Pumpe angeordnet, die die anzunehmende Milch in den unter Überdruck zu setzenden Luftabscheidebehälter pumpt. Der Überdruck sorgt dann dafür, daß über die Förderleitung die Milch aus dem Luftabscheidebehälter in den Sammeltank gefördert wird.

Bei beiden Arten von Luftabscheidern ist der Querschnitt im unteren bis mittleren Bereich der Höhe des Luftabscheidebehälters durch einen eingebauten, ringförmigen Verdrängerkörper vermindert. In der Mitte dieses Verdrängerkörpers ist ein Schwimmer angeordnet, der feinfühlig bei Einreichen eines unteren Milchpegels im Bereich des Verdrängerkörpers ein Schaltsignal zum Abschalten der Pumpe in der Saug- oder Förderleitung gibt. Oberhalb dieses unteren Niveaus arbeitet die Pumpe immer mit voller Leistung. Aus Gründen möglichst geringer Turbulenzen im Luftabscheidebehälter sollte der Milchpegel während der Hauptphase der Annahme oberhalb des Einlaufs der Saugleitung liegen. Bei dem bekannten Luftabscheider läßt sich dies nicht gewährleisten. Bei ungünstigen Ansaugverhältnissen, sinkt der Milchpegel sehr schnell und bei voller Pumpenleistung gelangt mitangesaugte Luft mit hoher Strömungsenergie in den Luftabscheidebehälter, was die Luftabscheidung beeinträchtigt. Schließlich wirken sich ungünstige Ansaugverhältnisse als nachteilig bei einem Luftabscheider mit in der Saugleitung liegender Pumpe insofern aus, als die mit voller Leistung betriebene Pumpe nicht vollvolumetrisch betrieben wird bzw. kavitiert.

Darüber hinaus ist ein Luftabscheider der eingangs genannten ersten Art bekannt, bei dem allerdings im Unterschied zu den beschriebenen bekannten Luftabscheidern kein Verdrängerkörper im Luftabscheidebehälter eingebaut ist (DE-AS 2 014 438). Die bei diesem Luftabscheider auf das Füllstandsniveau ansprechende Regeleinrichtung steuert sowohl eine Unterdruckpumpe als auch die Pumpe in der Förderleitung als auch eine stufenweise einschaltbare Drosseleinrichtung in der Förderleitung derart, daß unter Ausnutzung der Maximalleistung einer Mengenmeßeinrichtung in der Förderleitung das Füllstandsniveau zwischen einem kleinsten unteren Wert und einem maximalen oberen Wert unterhalb der Saugleitung gehalten wird. Da der Luftabscheider möglichst mit voller Durchsatzleistung der Meßeinrichtung für die Milchmenge betrieben werden soll, gelangt die Milch mit hoher Strömungsenergie in den Luftabscheidebehälter, wodurch Turbulenzen im Luftabscheidebehälter und damit der Einschluß von Luft in der Milch begünstigt wird.

Der Erfindung liegt die Aufgabe zugrunde, einen Luftabscheider der eingangsgenannten Art zu schaffen, bei dem durch das Einlaufen von Milch in den Luftabscheidebehälter verursachte Turbulenzen minimiert sind. Im Falle der Anordnung der Pumpe in der Saugleitung soll die Pumpe bei ungünstigen Ansaugverhältnissen vor einem Kavitieren zu schützen.

Diese Aufgabe wird bei einem Luftabscheider der eingangs genannten Art dadurch gelöst, daß die Regeleinrichtung bei steigendem Niveau die Förderleistung der Pumpe stufenlos erhöht und bei fallendem Niveau stufenlos vermindert derart, daß das Niveau möglichst oberhalb des Einlaufs der Saugleitung liegt. Vorzugsweise weist die Pumpe einen stetig regelbaren hydraulischen Antrieb auf.

Bei dem erfindungsgemäßen Luftabscheider wird über die Erfassung des Milchniveaus im Luftabscheidebehälter auf die während der Annahme der Milch unterschiedlichen Volumina der in den Luftabscheidebehälter geförderten und aus ihm zum Sammeltank geförderten Milch reagiert, mit der Folge, daß über eine maximal lange Phase der Annahme, die bis zum Beginn der Endphase reicht, das Milchniveau durch Anpassung der Pumpenleistung im optimalen Niveaubereich oberhalb des Einlaufs gehalten. Dadurch werden die Turbulenzen während der Annahme gering gehalten. Auch kann es nicht mehr zu einem Leerlaufen der in der Saugleitung liegenden Pumpe bei voller Förderleistung kommen, weil bei fallendem Milchniveau die Pumpe in der Förderleistung vermindert wird. Diese Verminderung in der Förderleistung bewirkt auch bei ungünstigen Ansaugverhältnissen, daß genügend Milch nachfließt, um einigermaßen vollvolumetrisch die Pumpe zu betreiben. Die Pumpe wird also weitgehend gegenüber dem gefährlichen Leerlaufen geschützt.

Im folgenden wird die Erfindung anhand einer ein Ausführungsbeispiel schematisch darstellenden Zeichnung näher erläutert.

An einem Luftabscheiderbehälter 1 ist eine Vakuumpumpe 2 über eine Leitung 3 angeschlossen. Im mittleren bis unteren Bereich des Luftabscheidebehälters 1 ist ein ringförmiger, kegeliger Verdrängerkörper 4 untergebracht, in dessen mittlerer Öffnung ein Schwimmer 5 angeordnet ist,der mit einem nicht der dargestellten proportionalen Füllstandsgeber zusammenarbeitet, der an eine Regeleinrichtung 6 ein dem Füllstand proportionales Signal liefert.

In dem Luftabscheidebehälter 1 mündet oberhalb des Verdrängerkörpers 4 tangential eine Saugleitung 7 ein. Vom unteren Bereich des Luftabscheidebehälters 1 geht eine Förderleitung 8a, 8b aus, in der eine Pumpe 9 angeordnet ist, die von einem hydraulichen Antrieb 10 angetrieben wird. An dem Abschnitt 8b der Förderleitung ist ein volumetrisches Meßgerät 11 angeschlossen.

Der Ausgang der Regeleinrichtung 6 ist mit einem Stellglied des Hydraulikantriebes 10 verbunden. Gespeist wird der Hydraulikantrieb 10 im Bypaß über eine Zu- und Ableitung 12, über die von einem Nebenantrieb des Motors des Milchsammelwagens Hydraulikflüssigkeit geliefert wird. Das Stellglied der Regeleinrichtung (6) wirkt auf eine Regelventil ein, um den Hydraulikantrieb 10 in einem großen Leistungsbereich und damit auch die Pumpe 9 stetig zu steuern.

Neben dem beschriebenen Ausführungsbeispiel mit der Pumpe 9 in der Förderleitung 8a, 8b kann die Erfindung auch anders ausgeführt werden, und zwar mit einer Pumpe in der Saugleitung 7. Die Steuerung und Regelung dieser Pumpe ist gleich der am Ausführungsbeispiel beschriebenen.

Die Funktionsweise des erfindungsgemäßen Luftabscheiders ist folgende:

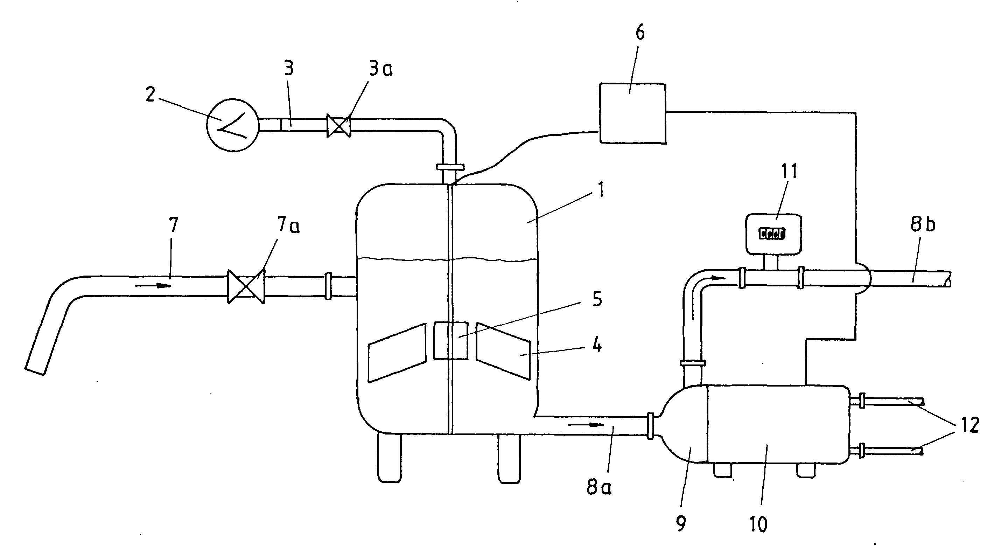

Zu Beginn der Milchannahme befindet sich das Milchniveau im Bereich des Verdrängerkörpers 4. Die Pumpe 9 mit ihrem Antrieb 10 ist bei diesem Niveau noch abgeschaltet. Durch die Vakuumpumpe 2 wird über ein Ventil 3a in der Leitung 3 bei noch geschlossenen Ventil 7a in der Saugleitung 7 Unterdruck im Luftabscheidebehälter 1 erzeugt. Nach Eintauchen der Saugleitung 7 in einen mit Milch gefüllten Behälter des Lieferanten und Öffnen des Ventils 7a gelangt Milch in den Luftabscheidebehälter 1. Mit dem Ansteigen des Milchniveaus wird auch der Schwimmer 5 angehoben und sein Füllstandsgeber liefert ein Signal an die Regeleinrichtung 6. Dieses Signal verarbeitet die Regeleinrichtung 6 und gibt es als Stellsignal an ein Stellglied des Hydraulikantriebes 10 weiter. So wird bei Beginn des Niveauanstiegs die Pumpe 9 mit niedriger Leistung angefahren und mit steigenden Niveau in der Leistung bis auf volle Leistung bei Erreichen des in der Zeichnung angedeuteten oberen Niveaus erhöht. In Abhängingkeit von Veränderung des Füllstandsniveau wird dann die Leistung der Pumpe 9 so geregelt, daß auch bei schwankendem, zulaufenden Milchvolumen das Füllstandsniveau möglichst auf dem oberen Niveau gehalten wird. Sinkt das Niveau z.B. wegen ungünstiger Ansaugbedingungen oder weil die gesammte Milch schon abgesaugt ist, dann wird die Pumpe 9 entsprechend dem fallenden Füllstandsniveau in der Förderleistung heruntergefahren, bis daß bei Erreichen des unteren Niveaus im Bereich des Verdrängerkörpers 4 die Abschaltung erfolgt.

## Patentansprüche

1. Luftabscheider für einen Milchsammelwagen mit einer in einen Luftabscheidebehälter (1) einmündenden Saugleitung (7) für die von einem Lieferanten anzunehmende Milch und einer vom Luftabscheidebehälter (1) zu einem Sammeltank führenden Förderleitung (8a, 8b), wobei in der Saug- oder Förderleitung eine Pumpe (9) angeordnet ist, deren Förderleistung steuerbar ist und der eine auf das Füllstandsniveau im Luftabscheidebehälter (1) ansprechende Regeleinrichtung (6) zugeordnet ist,
**dadurch gekennzeichnet,** daß die Regeleinrichtung (6) bei steigendem Niveau die Förderleistung der Pumpe (9) stufenlos erhöht und bei fallendem Niveau stufenlos vermindert derart, daß das Niveau möglichst oberhalb des Einlaufs der Saugleitung (7) liegt.

2. Luftabscheider nach Anspruch 1,
**dadurch gekennzeichnet,** daß die Pumpe (9) einen stetig regelbaren hydraulischen Antrieb (10) aufweist.
